# EUROPÄISCHE PATENTSCHRIFT

(11) **EP 1 046 537 B1**
(45) Veröffentlichungstag und Bekanntmachung des Hinweises auf die Patenterteilung: **11.01.2006**
(21) Anmeldenummer: 00106677.8
(22) Anmeldetag: 29.03.2000
(51) Int. Cl.: B60N 2/36

(54) **Beschlag für einen Fahrzeugsitz**
Fitting for vehicle seats
Ferrure pour sièges de véhicules

(30) Priorität: 24.04.1999 DE 19918737
(43) Veröffentlichungstag der Anmeldung: 25.10.2000
(73) Patentinhaber: KEIPER GmbH & Co. KG, 67657 Kaiserslautern (DE)
(72) Erfinder: Arrenberg, Jürgen, 42285 Wuppertal (DE)
(74) Vertreter: Patentanwälte Hosenthien-Held und Dr. Held

(56) Entgegenhaltungen:
- DE-A- 3 045 309
- DE-A- 3 507 894
- DE-A- 19 720 944
- DE-A- 19 741 996

## Beschreibung

Die Erfindung betrifft einen Beschlag für einen Fahrzeugsitz, insbesondere für einen Kraftfahrzeugsitz, mit den Merkmalen des Oberbegriffs des Anspruches 1.

Ein aus der DE-A-197 20 944 bekannter Beschlag dieser Art ist auf beiden Seiten eines Fahrzeugsitzes in einem Kraftfahrzeug vorgesehen. Zwischen einer fest mit der Fahrzeugstruktur verbundenen Wange und einem Stellhebel ist eine erste Drehachse und zwischen dem Stellhebel und einer fest mit der Struktur der Rückenlehne verbundenen Arretierplatte eine zweite Drehachse vorgesehen. Durch eine Schwenkbewegung des Beschlags um die erste Drehachse ist es möglich, die Neigung der Rückenlehne einzustellen. Zur Vergrößerung der Ladefläche kann die Rückenlehne um die oberhalb der ersten Drehachse angeordnete zweite Drehachse nach vorne in eine waagrechte Tischstellung geschwenkt werden. Damit wird verhindert, dass die Rückenlehne aufgrund der Polsterung der Rückenlehne und des Sitzkissens nur bis zu einer schräg nach vorne geneigten Stellung geschwenkt kann, aufgrund der Nähe zum Fahrzeughimmel nur das Abstellen kleine Gegenstände auf der vorgeschwenkten Rückenlehne ermöglichen würde, die nach unten rutschen oder auf die im waagrechten Teil der Ladefläche liegenden Gegenstände drücken könnten, was insbesondere beim Be- und Entladen stören würde und gelegentlich auch zu Beschädigungen des Fahrzeughimmels oder der Polsterung führen würde.

Der Erfindung liegt die Aufgabe zu Grunde, einen Beschlag der eingangs genannten Art zu verbessern. Diese Aufgabe wird erfindungsgemäß durch einen Beschlag mit den Merkmalen des Anspruches 1 gelöst. Vorteilhafte Ausgestaltungen sind Gegenstand der Unteransprüche.

Durch die externe Anordnung der zweiten Drehachse, also die Anordnung außerhalb der lasttragenden Teile der Sitzstruktur , beispielsweise außerhalb der Lehnenstruktur der Rückenlehne, können die Bauteile zur Ausführung der zweiten Drehachse als Leichtbau ausgelegt sein. Für eine einfache konstruktive Verwirklichung ist die zweite Drehachse zwischen einem mit der Fahrzeugstruktur verbundenen Lagerelement und einem mit der Rückenlehne verbundenen Verbindungselement vorgesehen. Das Verbindungselement ist dann in der Sitzstellung der Rückenlehne mit der Fahrzeugstruktur verbunden und zum Übergang in die Tischstellung von der Fahrzeugstruktur lösbar. Dadurch kann das Verbindungselement Kräfte, die auf die Rückenlehne in der Sitzstellung wirken, direkt in die Fahrzeugstruktur einleiten. Eine Belastung der zweiten Drehachse wird vermieden, so dass ihrer konstruktive Ausbildung beispielsweise nicht auf Schutz vor Ladung im Crashfall ausgelegt sein muss.

Die Tischstellung ist nicht zu verwechseln mit einer bei manchen Rücksitzbänken vorgesehenen Packagestellung, für welche die Rückenlehne so weit wie möglich vorgeschwenkt und die Rücksitzbank an ihren hinteren Füßen ausgeklinkt und um eine Drehachse im Bereich ihrer vorderen Füße vollständig hochgeschwenkt wird. Die Tischstellung ist auch nicht zu verwechseln mit der freigeschwenkten Stellung, für welche die Rückenlehne zum Zwecke eines besseren Zugangs zur dahinter angeordneten Sitzreihe unter Beibehaltung der eingestellten Neigung nach vorne geschwenkt wird.

Gegenüber einer einfachen Verlagerung der ersten Drehachse hat eine zweite Drehachse den Vorteil, dass die Neigungseinstellung in der bekannten Weise erfolgen und für den Benutzer für eine später wieder einzunehmende Sitzstellung der Rückenlehne erhalten werden kann. Der Sitzkomfort wird beibehalten, und auch das Design kann unverändert bleiben.

Das Verbindungselement weist vorzugsweise einen Fußteil auf, welcher in der Sitzstellung der Rückenlehne in einer an der Fahrzeugstruktur vorgesehenen Aufnahme angeordnet ist und durch Anschläge und/oder Verriegelungsmittel gesichert ist, mittels denen das Verbindungselement in der Sitzstellung der Rückenlehne mit der Fahrzeugstruktur verbunden ist. Die verwendeten Bauteile leiten die auftretenden Kräfte gut weiter und sind trotzdem einfach und kostengünstig herzustellen.

Um einerseits die eingestellte Neigung der Rückenlehne auf einfache Weise für eine spätere Rückkehr in die Sitzstellung zu speichern und um andererseits für eine einfache und billige Herstellung eine vorhandene Grundstruktur mit bekannten Bauteilen verwenden zu können, ist es von Vorteil, wenn die Verbindung des Verbindungselementes mit der Rückenlehne über ein Beschlagunterteil, welches mit dem Verbindungselement verbunden ist, und ein um die erste Drehachse relativ zum Beschlagunterteil verdrehbares Beschlagoberteil, welches mit der Rückenlehne verbunden ist, erfolgt. Das Beschlagunterteil und das Beschlagoberteil sind Teile eines bekannten Gelenkbeschlags, beispielsweise eines Rastbeschlags. Ebenso kann hierfür ein Getriebe- oder Taumelbeschlag eingesetzt werden, wobei dann das Zentrum der Taumelbewegung die Funktion der ersten Drehachse übernimmt.

Eine am Beschlag vorgesehene Feder, beispielsweise eine Gasfeder, hat den Vorteil, dass sie den Übergang der Rückenlehne in die Tischstellung wenigstens teilweise unterstützen kann, nämlich in der Endphase der Schwenkbewegung. Die Feder kann auch die Rückenlehne in der Tischstellung sichern, indem sie Auslenkungen entgegenwirkt. Wenn die Feder so angebracht ist, dass während der Schwenkbewegung zwischen Sitzstellung und Tischstellung eine spürbare Richtungsänderung der Kraft der Feder auftritt, also ein Totpunkt, so unterstützt die Feder auch einen Übergang in die Sitzstellung. Durch die Kraftrichtung der Feder wird dem Benutzer auch angezeigt, in welche Stellung die Rückenlehne schwenkt. Für eine einfache Herstellung des erfindungsgemäßen Beschlags ist die Feder zwischen dem Lagerelement und dem Verbindungselement vorgesehen.

Der erfindungsgemäße Beschlag wird vorzugsweise bei einem Fahrzeugvordersitz, insbesondere eines Kraftfahrzeuges, eingesetzt, kann aber auch bei Rücksitzen in Großraumfahrzeugen (Vans) und in anderen Fahrzeugen eingesetzt werden.

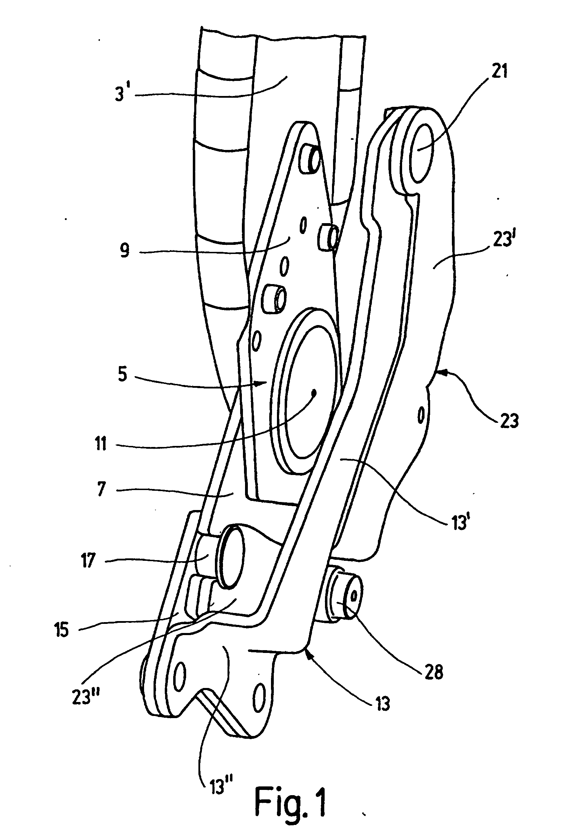

Im folgenden ist die Erfindung anhand eines in der Zeichnung dargestellten Ausführungsbeispiels näher erläutert. Es zeigen
- Fig. 1: einen perspektivische Ansicht des für die linke Fahrzeugsitzseite bestimmten, erfindungsgemäßen Beschlags von schräg vorne,

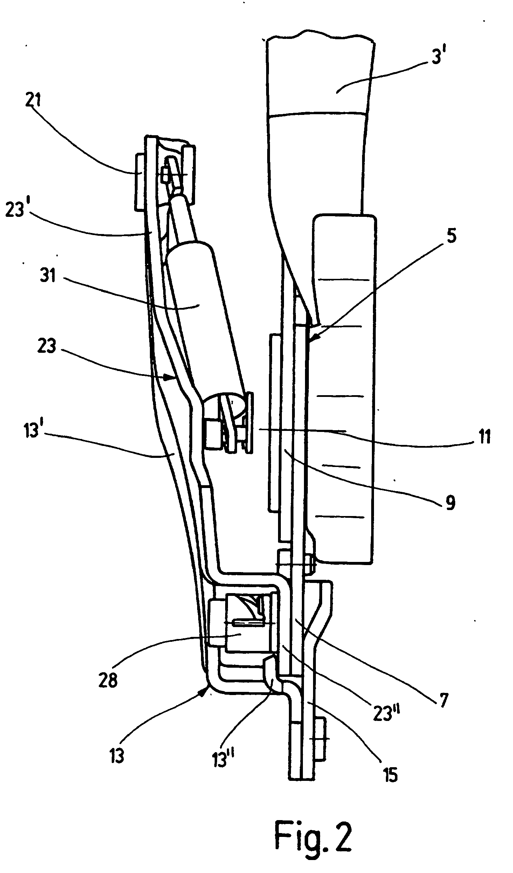

- Fig. 2: eine Ansicht des Beschlags aus Fig. 1 von hinten,

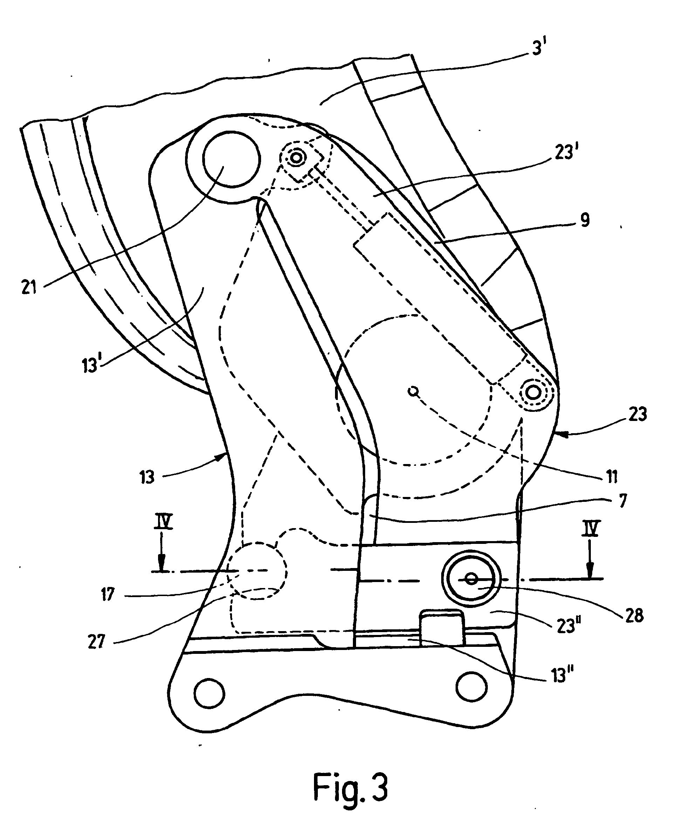

- Fig. 3: eine Ansicht der linken Seite des Beschlags aus Fig. 1,
- Fig. 4: einen Schnitt entlang der Linie IV-IV in Fig. 3,
- Fig. 5A: eine schematische Seitenansicht eines erfindungsgemäßen Fahrzeugsitzes mit angedeutetem Sitzkissen und Rückenlehne in der Sitzstellung,
- Fig. 5B: eine schematische Seitenansicht eines erfindungsgemäßen Fahrzeugsitzes mit angedeutetem Sitzkissen und Rückenlehne in der Tischstellung,

Ein Fahrzeugsitz 1 für ein Kraftfahrzeug weist eine Rückenlehne 3 auf, welche bei Gebrauch des Fahrzeugsitzes 1 zur Personenbeförderung eine einsitzbare Sitzstellung einnimmt. In dieser Sitzstellung ist die Rückenlehne 3 auf den beiden Fahrzeugseiten jeweils an ihren Lehnenholmen 3' über einen Gelenkbeschlag 5 im engeren Sinne und weitere Teile in der nachfolgend beschriebenen Weise mit der Fahrzeugstruktur des Kraftfahrzeuges verbunden. Die Gelenkbeschläge 5 umfassen jeweils ein Beschlagunterteil 7, das über die Sitzteilstruktur des Fahrzeugsitzes 1 und/oder über die Sitzschienen mit der Fahrzeugstruktur verbunden ist, und ein Beschlagoberteil 9, das mit dem Lehnenholm 3' fest verbunden und relativ zu dem Beschlagunterteil 7 um eine erste Drehachse 11 drehbar im Beschlagunterteil 7 gelagert ist. Durch Verdrehen des Beschlagoberteils 9 auf beiden Seiten des Fahrzeugsitzes 1 schwenkt die Rückenlehne 3 um die erste Drehachse 11, so daß für den Benutzer die gewünschte Neigung der Rückenlehne 3 einstellbar ist.

An der Fahrzeugstruktur, genauer gesagt zunächst an der Sitzteilstruktur, ist auf beiden Seiten des Fahrzeugsitzes 1 im Bereich der Gelenkbeschläge 5 jeweils ein Lagerblech 13 fest angebracht. Das Lagerblech 13 weist einen aufrecht stehenden Schwertteil 13' und an dessen unterem Ende einen dazu stufenförmig, rechtwinklig abgebogenen, nach innen zur Rückenlehne 3 hin weisenden Aufnahmeteil 13" auf. Im unteren Bereich des Aufnahmeteils 13" liegt ein Verriegelungsblech 15 an, welches parallel zum Schwertteil 13' steht, aber eine deutlich geringere Höhe aufweist.

Die Befestigung an der Fahrzeugstruktur erfolgt über eine Verschraubung, die sowohl das Lagerblech 13 im unteren Bereich des Aufnahmeteils 13" als auch das daran anliegende Verriegelungsblech 15 durchdringt. Der Aufnahmeteil 13" bildet, zusammen mit dem Verriegelungsblech 15, eine nach oben offene Aufnahme, die in Fahrtrichtung leicht schräg nach oben verlaufend ausgerichtet ist. Im vorderen Teil dieser Aufnahme steht vom Verriegelungsblech 15 ein waagrecht verlaufender Anschlagsbolzen 17 ab. Im hinteren Teil der Aufnahme ist am Verriegelungsblech 15 eine Verriegelungsbohrung 19 vorgesehen.

Am oberen Ende des Schwertteils 13' ist mittels eines Achsbolzens 21, der später als zweite Drehachse dient, ein Verbindungsblech 23 angelenkt. Das Verbindungsblech 23 weist einen größeren, parallel zum Schwertteil 13' des Lagerblechs 13 ausgerichteten, ebenfalls schwertförmigen Laschenteil 23' auf. Im unteren Bereich dieses Laschenteils 23' schließt sich ein stufenförmig abgebogener Fußteil 23" an. In der Sitzstellung der Rückenlehne 3 liegt der Fußteil 23" des Verbindungsblechs 23 zwischen dem Aufnahmeteil 13" des Lagerblechs 13 und dem Verriegelungsblech 15. Der Fußteil 23" ist an seinem vorderen Ende mit einer maulförmigen Anschlagsaufnahme 27 versehen, die den Anschlagsbolzen 17 aufnimmt. An seinem hinteren Ende weist der Fußteil 23" eine Buchse 28 mit einem darin beweglich gelagerten, zum Anschlagsbolzen 17 parallelen Verriegelungsbolzen 29 auf, welcher durch Federkraft aus der Buchse 28 heraus in die Verriegelungsbohrung 19 des Verriegelungsblechs 15 hinein gedrückt wird und durch eine Zugkraft wieder zurückholbar ist. Eine Gasfeder 31 ist mit einem Ende am Verbindungsblech 23 im mittleren Bereich des Laschenteils 23' und mit dem anderen Ende am Lagerblech 13 im oberen Bereich des Schwertteils 13', unmittelbar neben dem Achsbolzen 21, angelenkt.

Durch die Sicherung mittels des Anschlagsbolzens 17 und der Anschlagsaufnahme 27 einerseits und der Verriegelungsbohrung 19 und des Verriegelungsbolzens 29 andererseits wird das Verbindungsblech 23 am Verriegelungsblech 15 festgelegt, wodurch es in dieser Stellung mit der Fahrzeugstruktur verbunden ist. Am Fußteil 23" des Verbindungsblechs 23 ist auf der vom Lagerblech 13 abgewandten Seite das Beschlagunterteil 7 des Gelenkbeschlags 5 angebracht, welches in dieser Stellung am Verriegelungsblech 15 anliegt, wobei vorzugsweise die Buchse 28 für den Verriegelungsbolzen 29 zugleich das Beschlagunterteil 7 durchdringt. Die zuletzt beschriebenen Verbindungen und die daran beteiligten Bauteile sind auf die Übertragung hoher Kräfte ausgelegt, wie sie im Crashfall auftreten und von der Rückenlehne 3 über die Gelenkbeschläge 5 in die Fahrzeugstruktur einzuleiten sind.

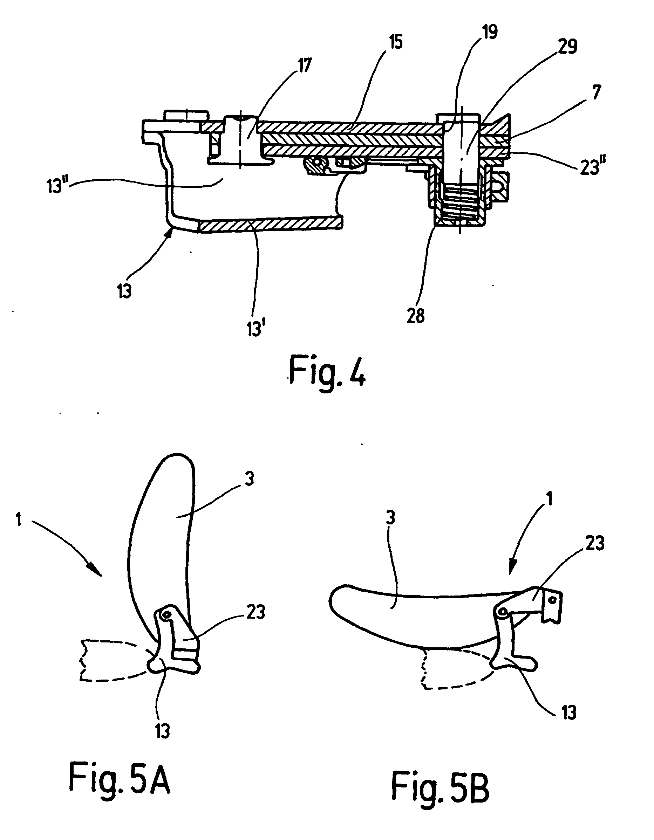

Zur Vergrößerung der Ladefläche des Kraftfahrzeuges oder als Arbeitsfläche ist die Rückenlehne 3 aus der Sitzstellung, wie sie in Fig. 5A schematisch dargestellt ist, nach vorne in eine ungefähr waagerechte Tischstellung schwenkbar, wie es in Fig. 5B schematisch dargestellt ist. Hierzu wird auf jeder Seite der Verriegelungsbolzen 29, beispielsweise durch einen Bowdenzug, aus der Verriegelungsbohrung 19 zurückgezogen. Die Rückenlehne 3 kann nun um die beiden Achsbolzen 21 als zweiter Drehachse schwenken, wobei der Fußteil 23" jedes Verbindungsblechs 23 sich mit seiner Anschlagsaufnahme 27 vom Anschlagsbolzen 17 löst und sich zunächst nach hinten vom Aufnahmeteil 13" des zugehörigen Lagerblechs 13 weg bewegt, um dann die Schwenkbewegung nach oben durchzuführen. Der Gelenkbeschlag 5 schwenkt als Ganzes mit, ohne daß sich Beschlagunterteil 7 und Beschlagoberteil 9 relativ zueinander verdrehen. Die auf Druck beanspruchte Gasfeder 31 wird bei dieser Schwenkbewegung des Verbindungsblechs 23 relativ zum Lagerblech 13 zunächst zusammengedrückt, kann jedoch nach Überwindung eines Totpunktes, der bei schräg ausgerichteter Rückenlehne 3 eingenommen wird, wieder expandieren und unterstützt dann den Übergang in die Tischstellung. Ist die Tischstellung erreicht, genügt in der Regel die Kraft der Gasfeder 31, um die Rückenlehne 3 in dieser Tischstellung zu sichern. Es können jedoch auch zusätzliche Verriegelungselemente oder expandierende Kraftmedien vorgesehen sein. Die Achsbolzen 21 als zweite Drehachse sind bezüglich der Lehnenstruktur der Rückenlehne 3 extern angeordnet, also außerhalb des Kraftflußes in der Sitzstruktur, d.h. im Crashfall werden die auftretenden Kräfte von der Lehnenstruktur der Rückenlehne 3 über den Gelenkbeschlag 5 in die Sitzteilstruktur und weiter in die Fahrzeugstruktur geleitet. Die Achsbolzen 21 sind nämlich beispielsweise nicht in den Lehnenholmen 3' gelagert und müssen daher im Crashfall keine Lasten übertragen. Die Verbindung über das Verbindungsblech 23 und das Lagerblech 13 ist deshalb wegen der in der Tischstellung reduziert auftretenden Lasten im Crashfall als Leichtbau ausgelegt. In der Sitzstellung ist die Verbindung über das Verbindungsblech 23 und das Lagerblech 13 sozusagen parallel zur Sitzstruktur angeordnet und damit lastenfrei.

Um von der Tischstellung wieder in die Sitzstellung der Rückenlehne 3 überzugehen, wird die Rückenlehne 3 im Bereich ihres nunmehr vorne gelegenen Endes ergriffen und entgegen der leicht ansteigenden Kraft der Gasfeder 31 um die Achsbolzen 21 nach hinten zurückgeschwenkt. Nach Überwinden des Totpunktes unterstützt die Gasfeder 31 die Schwenkbewegung. Sobald der Fußteil 23" jedes Verbindungsblechs 23 den Aufnahmeteil 13" des zugehörigen Lagerblechs 13 erreicht hat, greift die Anschlagsaufnahme 27 um den Anschlagsbolzen 17. Der Verriegelungsbolzen 29 wird zurückgedrückt, beispielsweise mittels einer Anlaufschräge, um dann federbelastet in die Verriegelungsbohrung 19 einzufallen. Damit sind das Verbindungsblech 23 und das Lagerblech 13 und damit der Gelenkbeschlag 5 und die Fahrzeugstruktur wieder miteinander verbunden. Die Bewegung des Verriegelungsbolzens 29 kann auch mittels einer Kulissenführung in der Buchse 28 erfolgen.

### Bezugszeichenliste

- 1: Fahrzeugsitz
- 3: Rückenlehne
- 3': Lehnenholm
- 5: Gelenkbeschlag
- 7: Beschlagunterteil
- 9: Beschlagoberteil
- 11: erste Drehachse
- 13: Lagerelement, Lagerblech
- 13': Schwertteil
- 13": Absatzteil
- 15: Verriegelungsblech
- 17: Anschlagsbolzen
- 19: Verriegelungsbohrung
- 21: zweite Drehachse, Achsbolzen
- 23: Verbindungselement, Verbindungsblech
- 23': Laschenteil
- 23": Fußteil
- 27: Anschlagsaufnahme
- 28: Buchse
- 29: Verriegelungsbolzen
- 31: Gasfeder

## Patentansprüche

1. Beschlag für einen Fahrzeugsitz, insbesondere für einen Kraftfahrzeugsitz, bei dem die Rückenlehne (3) des Fahrzeugsitzes (1) in einer Sitzstellung durch Schwenken um eine erste Drehachse (11) in ihrer Neigung einstellbar ist, wobei parallel zur ersten Drehachse (11) und im Abstand dazu eine zweite Drehachse (21) vorgesehen ist, welche in der Sitzstellung der Rückenlehne (3) oberhalb der ersten Drehachse (11) angeordnet ist und um welche die Rückenlehne (3) in eine Tischstellung schwenkbar ist, **dadurch gekennzeichnet, dass** die zweite Drehachse (21) extern bezüglich der lasttragenden Teile der Sitzstruktur angeordnet ist, indem die zweite Drehachse (21) zwischen einem mit der Fahrzeugstruktur verbundenen Lagerelement (13) und einem mit der Rückenlehne (3) verbundenen Verbindungselement (23) vorgesehen ist, wobei das Verbindungselement (23) in der Sitzstellung der Rückenlehne (3) mit der Fahrzeugstruktur verbunden ist und zum Übergang in die Tischstellung von der Fahrzeugstruktur lösbar ist.

2. Beschlag nach Anspruch 1, **dadurch gekennzeichnet, dass** das Verbindungselement (23) einen Fußteil (23 ") aufweist, welcher in der Sitzstellung der Rückenlehne (3) in einer an der Fahrzeugstruktur vorgesehene Aufnahme (13", 15) angeordnet ist und durch Anschläge (17, 27) und/oder Verriegelungsmittel (19, 29) gesichert ist, mittels denen das Verbindungselement (23) in der Sitzstellung der Rückenlehne (3) mit der Fahrzeugstruktur verbunden ist.

3. Beschlag nach Anspruch 2, **dadurch gekennzeichnet, dass** der Fußteil (23") eine Buchse (28) mit einem darin beweglichen Verriegelungsbolzen (29) aufweist, welcher durch Federkraft aus der Buchse (28) heraus in eine Verriegelungsbohrung (19) des Verriegelungsblechs (15) hinein gedrückt wird und durch eine Zugkraft wieder zurückholbar ist.

4. Beschlag nach einem der Ansprüche 1 bis 3, **dadurch gekennzeichnet, dass** die Verbindung des Verbindungselementes (23) mit der Rückenlehne (3) über ein Beschlagunterteil (7), welches mit dem Verbindungselement (23) verbunden ist, und ein um die erste Drehachse (11) relativ zum Beschlagunterteil (7) verdrehbares Beschlagoberteil (9), welches mit der Rückenlehne (3) verbunden ist, erfolgt.

5. Beschlag nach einem der Ansprüche 1 bis 4, **dadurch gekennzeichnet, dass** wenigstens eine Feder (31) vorgesehen ist, welche den Übergang der Rückenlehne (3) in die Tischstellung wenigstens teilweise unterstützt und die Rückenlehne (3) in der Tischstellung sichert.

6. Beschlag nach Anspruch 5, **dadurch gekennzeichnet, dass** die Feder (31) zwischen der Sitzstellung und der Tischstellung eine Richtungsänderung ihrer Kraft aufweist.

7. Beschlag nach Anspruch 5 oder 6, **dadurch gekennzeichnet, dass** die Feder (31) zwischen dem Lagerelement (13) und dem Verbindungselement (23) vorgesehen ist.

8. Fahrzeugsitz, insbesondere Kraftfahrzeugsitz, mit einem Beschlag nach einem der Ansprüche 1 bis 7.

## Claims

1. Fitting for a vehicle seat, in particular for a motor vehicle seat, wherein the backrest (3) of the vehicle seat (1) in a sitting position can be adjusted in terms of its inclination by being pivoted about a first pivot axis (11), a second pivot axis (21) being provided parallel with the first pivot axis (11) and with spacing therefrom, which second pivot axis (21) is arranged above the first pivot axis (11) when the backrest (3) is in the sitting position, and about which the backrest (3) can be pivoted into a table-like position, **characterised in that** the second pivot axis (21) is arranged externally relative to the load carrying portions of the seat structure, with the second pivot axis (21) being provided between a bearing element (13) which is connected to the vehicle structure and a connection element (23) which is connected to the backrest (3), the connection element (23) being connected to the vehicle structure when the backrest (3) is in the sitting position and being able to be released from the vehicle structure in order to be moved into the table-like position.

2. Fitting according to claim 1, **characterised in that** the connection element (23) has a base portion (23'') which is arranged in a receiving member (13'', 15) provided on the vehicle structure when the backrest (3) is in the sitting position, and which is secured by means of stops (17, 27) and/or locking means (19, 29), by means of which the connection element (23) is connected to the vehicle structure when the backrest (3) is in the sitting position.

3. Fitting according to claim 2, **characterised in that** the base portion (23") has a sleeve (28) having a locking pin (29) which can be moved therein and which is pressed, by means of resilient force, out of the sleeve (28) into a locking hole (19) of the locking plate (15) and can be drawn back again by means of a tensile force.

4. Fitting according to any one of claims 1 to 3, **characterised in that** the connection element (23) is connected to the backrest (3) by means of a lower fitting member (7), which is connected to the connection element (23), and an upper fitting member (9), which can be rotated relative to the lower fitting member (7) about the first pivot axis (11) and which is connected to the backrest (3).

5. Fitting according to any one of claims 1 to 4, **characterised in that** at least one spring (31) is provided which at least partially supports the transition of the backrest (3) into the table-like position and which secures the backrest (3) in the table-like position.

6. Fitting according to claim 5, **characterised in that** the spring (31) changes the direction of its force between the sitting position and the table-like position.

7. Fitting according to claim 5 or 6, **characterised in that** the spring (31) is provided between the bearing element (13) and the connection element (23).

8. Vehicle seat, in particular a motor vehicle seat, having a fitting according to any one of claims 1 to 7.

## Revendications

1. Ferrure pour un siège de véhicule, en particulier pour un siège de véhicule automobile, suivant laquelle le dossier (3) du siège de véhicule (1) dans une position de siège est réglable dans son inclinaison par basculement autour d'un premier axe de rotation (11), parallèlement au premier axe de rotation (11) et à distance de celui-ci, étant prévu un second axe de rotation (21), lequel est disposé dans la position de siège du dossier (3) au-dessus du premier axe de rotation (11), et autour duquel le dossier (3) est apte à pivoter dans une position de table, **caractérisée par le fait que** le deuxième axe de rotation (21) est disposé de façon externe par rapport à la partie portant la charge de la structure de siège, le deuxième axe de rotation (21) étant prévu entre un élément de palier (13) lié avec la structure du véhicule et un élément de liaison (23) lié avec le dossier (3), à l'occasion de quoi l'élément de liaison (23) est lié avec la structure du véhicule dans la position de siège du dossier (3) et est détachable de la structure du véhicule pour le passage à la position de table.

2. Ferrure selon la revendication 1, **caractérisée par le fait que** l'élément de liaison (23) présente une partie de pied (23"), laquelle est disposée dans la position de siège du dossier (3) dans un logement (13'', 15) prévu sur la structure du véhicule et est bloquée par des butées (17, 27) et/ou des moyens de verrouillage (19, 29), au moyen desquels l'élément de liaison (23) dans la position de siège du dossier (3) est lié avec la structure du véhicule.

3. Ferrure selon la revendication 2, **caractérisée par le fait que** la partie de pied (23") présente un coussinet (28) avec un axe de verrouillage (29) mobile dans celui-ci, lequel est amené à sortir du coussinet (28) par élasticité et à entrer dans un alésage de verrouillage (19) de la tôle de verrouillage (15) et est à nouveau rappelable par une force de traction.

4. Ferrure selon l'une des revendications 1 à 3, **caractérisée par le fait que** la liaison de l'élément de liaison (23) avec le dossier (3) a lieu par l'intermédiaire d'une partie inférieure de ferrure (7), laquelle est liée avec l'élément de liaison (23), et d'une partie supérieure de ferrure (9) qui est capable de tourner autour du premier axe de rotation (11) par rapport à la partie inférieure de ferrure (7) et laquelle partie supérieure de ferrure est liée avec le dossier (3).

5. Ferrure selon l'une des revendications 1 à 4, **caractérisée par le fait qu'**au moins un ressort (31) est prévu, lequel soutient au moins partiellement le passage du dossier (3) dans la position de table et bloque le dossier (3) dans la position de table.

6. Ferrure selon la revendication 5, **caractérisée par le fait que** le ressort (31) présente un changement de direction de sa force entre la position de siège et la position de table.

7. Ferrure selon l'une des revendications 5 ou 6, **caractérisée par le fait que** le ressort (31) est prévu entre l'élément de palier (13) et l'élément de liaison (23).

8. Siège de véhicule, en particulier siège de véhicule automobile, ayant une ferrure telle que définie à l'une des revendications 1 à 7.
